# EUROPEAN PATENT SPECIFICATION

(11) **EP 1 774 727 B1**
(45) Date of publication and mention of the grant of the patent: **22.11.2017**
(21) Application number: 05770707.7
(22) Date of filing: 08.07.2005
(51) Int. Cl.: H04W 72/12, H04W 72/04

(54) **METHOD AND APPARATUS FOR RESOURCE ALLOCATION**
VERFAHREN UND VORRICHTUNG ZUR RESSOURCENZUWEISUNG
METHODE ET APPAREIL POUR ATTRIBUER DES RESSOURCES

(30) Priority: 26.07.2004 GB 0416590
(43) Date of publication of application: 18.04.2007
(73) Proprietor: Google Technology Holdings LLC, Mountain View, CA 94043 (US)
(72) Inventor: MOLKDAR, Davood, Eastleigh Hampshire SO53 1FN (GB)
(74) Representative: Boult Wade Tennant
(86) International application number: PCT/US2005/024349
(87) International publication number: WO 2006/019631

(56) References cited:
- EP-A1- 1 227 625
- EP-A2- 1 018 811
- EP-A2- 1 158 699
- EP-A2- 1 523 210
- US-A- 4 819 230
- US-A1- 2003 176 193
- US-A1- 2004 028 018

## Description

### Technical Field

The invention relates to a method and apparatus for resource allocation in a wireless communication system. In particular, but not exclusively, it relates to a method and apparatus for resource allocation when time-slot theft is a possibility.

### Background

In a wireless packet-switched communications, radio resources are limited and thus generally shared amongst packet users, for example by multiplexing.

In some systems, the available radio resources are also divided to apportion some resources to real-time services such as voice, where delay is a critical quality factor, and other resources to non-real time services such as web browsing, software downloads etc.

This division may be by hard partitioning, where the division is fixed and channels are dedicated to real time or non real time services. Alternatively it may be by soft partitioning, where no channels are dedicated to any one service, or by partial soft partitioning where some channels are dedicated and some are not.

In a time division multiple access system, the channels correspond to a cycle of time slots on a given frequency. Other air interfaces (for example code division multiple access) use different methods of demarcating channels.

Typically, a base station sub-system assigning radio resources to downlink packet switched data further multiplexes users by sending packets for successive users on the same time slot in each cycle. Thus a single time slot can serve a number of packet users over a number of cycles.

By contrast, many real-time applications are circuit-switched, requiring using of a time slot every cycle. As a result it is easy to run out of those time slots allocated to downlink data for real-time applications.

A standard solution to this problem is slot-theft, wherein a slot currently allocated for non real-time packet switching users is temporarily used for a real-time circuit switching user. Therefore, however, the effect of slot-theft on packet switched users is frequently a severe impact on the grade of service they experience. An example of such a radio channel assignment method where each node in a network assigns radio channels to respective radio links in a decentralized manner without inconsistency is provided in US2003176193.

A need therefore exists for a method of slot theft that reduces the impact on packet-switched users. The purpose of the present invention is to address the above problem.

### Summary of the Invention

The present invention provides a method of intelligent placement of packet users for resource allocation, characterized by the steps of; i. defining a set T of preferred time slots to select from the event of slot theft; and ii. placing short lived packet users in said preferred time slots.

Advantageously, defining a set of slots more likely to be stolen and placing within them those packet users that are likely to soon end their connection reduces the overall impact of slot theft on the current packet users.

Short-lived packet users are typically defined as those whose buffered data for downlink transmission is less than a threshold size, and/or is not being added to.

The present invention provides a method of intelligent placement of packet users, as claimed in claim 1.

Further features of the present invention are as defined in the dependent claims. Embodiments of the present invention will now be described by way of example with reference to the accompanying drawings, in which;

### Brief description of the drawings

Fig. 1 is a schematic diagram of a base station sub-system in accordance with an embodiment of the present invention.
Fig. 2 is a schematic diagram of packet switched time slots in accordance with an embodiment of the present invention.

### Detailed description of embodiments of the invention

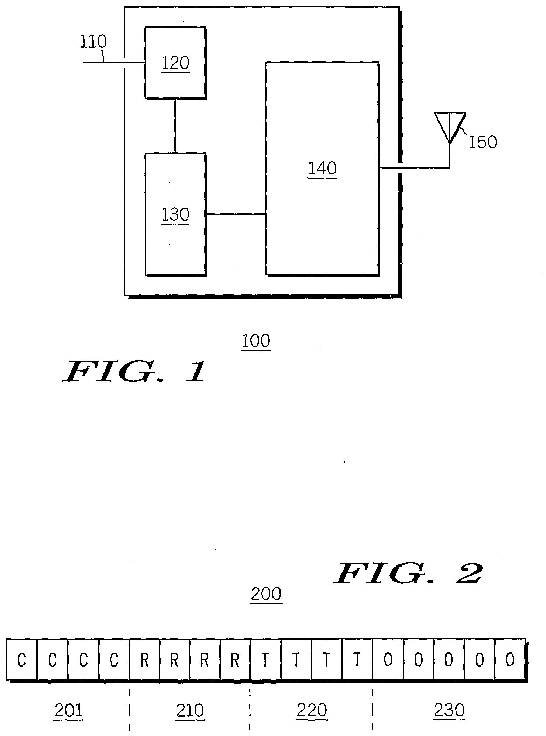

Referring to Figure 1, in an embodiment of the present invention, a base station sub-system 100 comprises an input means 110 for obtaining data from the network, a memory means 120 for buffering data, a packet control unit (PCU) 130 for allocating resources for packet switched data transmission, and transmission means 140, 150 for transmitting data packets down to user equipment (UE).

In operation, a number of users whose user equipment is running an application that communicates via packet switching (hereinafter 'packet users') may be awaiting data. Typically, that data will originate from remote services (for example, an internet server) and will be sent to the base station sub-system for transmission. The data is buffered in memory means 120 and this buffered data is accessed by a packet control unit that assigns packets to time slots for transmission.

As noted previously, when a real-time application needs resources, those resources allocated to a real-time applications have all been used, one or more of the time slots available for packet users may be stolen.

Because many packet users my be assigned to a single time slot, theft of this slot can impact a number of users.

The inventors of the present invention have appreciated, however, that not all packet users are the same and that by differentiating the treatment of packet users in the event of slot theft, the overall impact of the theft can be reduced:
Referring now to figure 2, packet users can be intelligently placed during resource allocation by initially defining a set T 220 of preferred time slots to select from in the event of slot theft, and then placing short lived packet users in these preferred time slots.

A short-lived packet user may typically be defined as any or all of;
i. one whose buffered data for transmission is less than a threshold size; and
ii; one whose buffered data for transmission is not being significantly added to.

By placing short-lived users within those slots more likely to be stolen, the overall impact of slot theft is reduced as those users exposed to the risk of theft are more likely to complete their communication between theft instances.

Fig 2 illustrates those time slots in a cycle that are not hard-partitioned for real-time, circuit switched data. In traditional use, any unreserved slots might be stolen for switched applications.

In an embodiment of the present invention, there are three categories of slot;
A set of reserved slots for circuit switched users 'C' 201;
A set of reserved slots for packet users 'R' 210;
A set of preferred slots for packet theft 'T' 220 as noted previously; and
A set of ordinary slots for packet users that follow traditional soft-partitioned usage 'O' 230.

New packet users are initially placed in reserved time slots of set R 210, if available.

If no placement remains available within reserved set R, preferably new packet users are initially placed within those unreserved time slots other than in set T 220, i.e. in ordinary slots of set O 230.

If both sets R 210 and O 230 are full, initial packet users are placed in a time slot of set T if possible.

Thus the order of preference for placing new packet users in a time slot is in set R, then set O, and then set T, with the availability in each set determined by the number of time slots and any limits on multiplexing those slots.

### Management of short-lived packet users:

However, in an embodiment of the present invention, upon assessment that a packet user is in fact short-lived, they are moved to a time slot within set T:
Assessment of whether a packet user is short-lived may take any or all of two main forms;
   i. the amount of data in the buffer to be transmitted to a packet user, and
   ii. whether data for a packet user is still being added to from the network.

Clearly, a large amount of data in the buffer will take long to clear through the packet scheduler, and a threshold amount can be taken to define the point beyond which a user is no long considered short-lived. Such a threshold could be fixed, or relate to overall load, mean buffer size or downlink parameters.

The continuing addition of data suggest an ongoing data stream rather than a data burst, or at least that the eventual amount of data to be buffered is not yet determined and thus the packet user cannot be considered short-lived. D In addition, a threshold bit-rate could be introduced to indicate whether the amount of data still being added was significant.

Alternatively or in addition, if a data protocol provides information about the total size of the data being sent, or the service generating the data has a typical or standarised range of sent data sizes, this information may be used in determining whether the amount of data to be transmitted to a packet user will be below a certain threshold.

Clearly, it is possible that the assessments described above could be made before the first packet of a short-lived user is scheduled (for example in the case of a very short data burst such as an SMS text message) resulting in a short lived user being initially placed directly in a slot of set T in this circumstance.

In an embodiment of the present invention, packet users are multiplexed in time slots of set T if necessary.

Because theft of slots from set T is relatively likely, preferably only a maximum number of packet users are multiplexed within any one time slot of set T, to limit the impact of any one slot's theft. Additionally, this preferred maximum number of packet users to be multiplexed may be related to the size of set T, for example reducing the maximum size if more slots are available to reduce individual risk.

As slots of set T fill up, a channel holding time for packet users in slots of set T is dynamically adjusted, such that the holding time decreases in relation to the occupancy of set T. The holding time is typically used in case additional data arrives for a packet user, but for short-lived packet users this is likely to be a wasteful provision.

By reducing the holding time for packet users deemed to be short lived, trunking efficiency is thus increased without significant impact on packet user grade of service. Moreover, possible dummy transmissions associated with holding a channel open are reduced, so reducing channel interference.

In an enhanced embodiment of the present invention, in the event of a slot needing to be stolen, that slot from set T currently hosting the fewest multiplexed users is selected. This minimizes the number of packet users potentially affected.

Recall that by placing short-lived users within those slots more likely to be stolen, the overall impact of slot theft is reduced, as those users exposed to the risk of theft are more likely to complete their communication between theft instances.

This benefit can be further enhanced by introducing a short theft delay period;

In the event of a slot needing to be stolen, a slot is selected from set T and no new packet users are placed in said selected slot; the theft is then delayed for a period, to provide scope for completion by some or all of the current short-lived packet users I nthat slot.

The trade-off between delaying the theft and the grade of service to packet switched users is improved if
i. there are fewer multiplexed users on the selected time slot; and/or
ii. the shortes-lived packet users are on that time slot;

In general terms therefore, if a delayed theft strategy is employed then it is preferable to steal that time slot whose packet users; sum buffered data is smallest.

Thus in an embodiment of the present invention, packet users may be moved to specific time slots in set T according to how short-lived they are expected to be, and/or how many multiplexed packet users currently occupy a time slot. The aim of such movement would be to produce a time slot whose associated packet user or users had the smallest amount of buffered data to clear, and would thus clear in the shortest time.

### Management of long-lived packet users:

Long-lived (i.e. not short lived) packet users will eventually complete their communications, thus freeing up time slots in set O 230 or set R 210.

In an embodiment of the present invention, if space on a reserved time slot of set R 210 becomes available, then the longest-lived packet user on an unreserved time slot, where the longest-lived packet user is defined as any or all of:
i. the one with the largest size of buffered data; and
ii. the one with the most incoming data.

However, it will be clear to a person skilled in the art that set T 220 may encompass all unreserved time slots, i.e. that there is no set o 230. In this case the longest-lived packet user on an unreserved time slot of set T 220 is transferred to said reserved time slot.

The preferred maximum number of packet users multiplexed within a time slot of a set may vary with and within each set.

Set R comprises long-lived packet users and therefore it is preferable to discourage multiplexing as this increases the overall time taken to clear large blocks of buffered data.

However, the level of multiplexing may be made responsive to the occupancy of set R, or of sets R and O combined, with the aim of delaying the necessity to place long-lived packet users in set T in the even of high resource utilization.

### Apparatus:

The present invention provides a packet control unit arranged in operation to place packet users according to the method described in the embodiments herein.

Additionally, the present invention provides a base station subsystem comprising said packet control unit.

The present invention also provides a base station subsystem comprising packet user assessment means arranged in operation to determine for a packet user any or all of:
i. whether their buffered data for transmission is less than a threshold size; and
ii. whether their buffered data for transmission is not being added to.

It will be clear to a person skilled in the art that alternatively a base station sub-system or other suitable network elements may comprise a packet control unit or packet user assessment means as described above.

It will be understood that the method of intelligent placement of packet users for resource allocation as described above, provides at least one or more of the following advantages;
i. The overall impact of slot theft is reduced by placing within slots more likely to be stolen those users more likely to complete their communication between theft instances;
ii: The overall impact of slot theft may be further reduced by introducing a theft delay;
iii. Trunking efficiency is improved by reducing channel holding times for short-lived packet users; and
iv. Channel interference is also reduced by the reduction of channel holding times.

## Claims

1. A method of intelligent placement of packet users for resource allocation, the method **characterised by** the steps of;
defining a set T (220) of preferred time slots to select from in the event of slot theft; and
placing short-lived packet users in said preferred time slots,
wherein a short-lived packet user is defined as at least one of the group of;
i. one whose data size for downlink transmission is less than a threshold; and
ii. one whose buffered data for downlink transmission is not being significantly added to.

2. A method according to claim 1 and wherein the size of data is derived from any one or more of:
i. that size of data currently buffered;
ii. that size of data indicated by the data's protocol; and
iii. that size of data indicated by a service standard.

3. A method according to claim 1 further **characterised by** the step of;
defining a preferred maximum number of packet users to be multiplexed within at least one time slot of set T (220).

4. A method according to claim 3 wherein the preferred maximum number of packet users to be multiplexed is related to the size of set T (220).

5. A method according to claim 1, wherein new packet users are initially placed in reserved time slots R (210), if available.

6. A method according to claim 1, wherein the level of multiplexing of time slots in a set of reserved time slots R (210) is made responsive to one of the group of;
i. the occupancy of set R (210), and
ii. the combined occupancy of sets R (210) and a set O (230) of slots for packet users that follow traditional soft-partitioned usage.

7. A method according to claim 1 wherein a channel holding time for a packet user in a slot of set T (220) is dynamically adjusted, such that the holding time decreases in relation to the occupancy of set T.

8. A method according to claim 1, wherein in the event of a slot to be stolen, a slot is selected from set T (220) and no new packet users are placed in said selected slot; the theft is then delayed for a period, to provide scope for call completion by some or all of the current short-lived packet users.

9. A method according to claim 1, wherein in the event of a slot to be stolen, that slot from set T (220) currently hosting the fewest multiplexed users is selected.

10. A method according to claim 1, wherein if space on a reserved time slot becomes available, the longest-lived packet user on an unreserved time slot is transferred to said reserved time slot, where the longest-lived packet user is defined as any or all of:
i. the one with the largest size of buffered data; and
ii. the one with the most incoming data.

## Patentansprüche

1. Verfahren zur intelligenten Platzierung von Paketnutzern zur Ressourcenzuteilung, wobei das Verfahren durch folgende Schritte gekennzeichnet ist:
Definieren einer Menge T (220) von bevorzugten Zeitschlitzen, aus der im Fall eines Schlitzdiebstahls ausgewählt werden soll; und
Platzieren von kurzlebigen Paketnutzern in den bevorzugten Zeitschlitzen,
wobei ein kurzlebiger Paketnutzer zumindest als einer aus folgender Gruppe definiert ist:
i. einer, dessen Datengröße zur Downlink-Übertragung geringer als ein Schwellwert ist; und
ii. einer, zu dessen gepufferten Daten zur Downlink-Übertragung nicht wesentlich hinzugefügt wird.

2. Verfahren nach Anspruch 1, und wobei die Größe von Daten abgeleitet wird von einem oder mehreren von:
i. derjenigen Größe von Daten, die aktuell gepuffert sind;
ii. derjenigen Größe von Daten, die von einem Protokoll der Daten angegeben ist; und
iii. derjenigen Größe von Daten, die von einem Dienststandard angegeben ist.

3. Verfahren nach Anspruch 1, das ferner durch den folgenden Schritt gekennzeichnet ist:
Definieren einer bevorzugten maximalen Anzahl von Paketnutzern, die innerhalb zumindest eines Zeitschlitzes der Menge T gebündelt sein sollen.

4. Verfahren nach Anspruch 3, wobei die bevorzugte maximale Anzahl von Paketnutzern, die gebündelt werden sollen, mit der Größe von Menge T (220) in Beziehung steht.

5. Verfahren nach Anspruch 1, wobei neue Paketnutzer anfangs in reservierten Zeitschlitzen R (210), wenn verfügbar, platziert werden.

6. Verfahren nach Anspruch 1, wobei das Niveau von Bündeln von Zeitschlitzen in einer Menge von reservierten Zeitschlitzen R (210) reagierend gemacht wird auf eines oder die Gruppe von:
i. die Belegung von Menge R (210), und
ii. die gemeinsame Belegung von Mengen R (210) und einer Menge O (230) von Schlitzen für Paketnutzer, die einer traditionellen soft-partitionierten Verwendung folgen.

7. Verfahren nach Anspruch 1, wobei eine Kanalhaltezeit für einen Paketnutzer in einem Schlitz von Menge T (220) dynamisch angepasst wird, so dass die Haltezeit in Bezug auf die Belegung von Menge T abnimmt.

8. Verfahren nach Anspruch 1, wobei im Fall dass ein Schlitz gestohlen werden soll, ein Schlitz aus Menge T (220) ausgewählt wird und kein neuer Paketnutzer in dem ausgewählten Schlitz platziert wird;
der Diebstahl daraufhin für eine Zeitdauer verzögert wird, um Raum für Aufrufvervollständigung durch einige oder alle der aktuellen kurzlebigen Paketnutzer bereitzustellen.

9. Verfahren nach Anspruch 1, wobei im Fall dass ein Schlitz gestohlen werden soll, derjenige Schlitz aus Menge T (220) ausgewählt wird, der gegenwärtig die wenigsten gebündelten Nutzer hostet.

10. Verfahren nach Anspruch 1, wobei, wenn auf einem reservierten Zeitschlitz Platz verfügbar wird, der auf einen nicht-reservierten Zeitschlitz langlebigste Paketnutzer auf den reservierten Zeitschlitz übertragen wird, wobei der langlebigste Paketnutzer definiert ist als einer oder alle von:
i. derjenige mit umfangreichster Größe von gepufferten Daten; und
ii. derjenige mit den meisten eingehenden Daten.

## Revendications

1. Procédé de placement intelligent d'utilisateurs de paquets pour l'allocation de ressources, le procédé étant **caractérisé par** les étapes consistant en ;
la définition d'un ensemble T (220) de créneaux horaires préférés à sélectionner en cas de vol de créneau ; et
le placement d'utilisateurs de paquets de courte durée dans lesdits créneaux horaires préférés,
dans lequel un utilisateur de paquets de courte durée est défini comme au moins l'un des groupes parmi ;
i. un dont la taille des données pour la transmission de liaison descendante est inférieure à un seuil ; et
ii. dont les données tamponnées pour la transmission de liaison descendante ne sont pas significativement ajoutées.

2. Procédé selon la revendication 1 et dans lequel la taille des données est dérivée d'une ou plusieurs de :
i. la taille de données actuellement tamponnées ;
ii. la taille de données indiquée par le protocole de données ; et
iii. la taille de données indiquée par une norme de service.

3. Procédé selon la revendication 1, **caractérisé en outre par** l'étape consistant en :
la définition d'un nombre maximum préféré d'utilisateurs de paquets à multiplexer dans au moins un créneau horaire de l'ensemble T (220).

4. Procédé selon la revendication 3, dans lequel le nombre maximal préféré d'utilisateurs de paquets à multiplexer est lié à la taille de l'ensemble T (220).

5. Procédé selon la revendication 1, dans lequel les nouveaux utilisateurs de paquets sont initialement placés dans des créneaux horaires réservés R (210), s'ils sont disponibles.

6. Procédé selon la revendication 1, dans lequel le niveau de multiplexage des créneaux horaires dans un ensemble de créneaux horaires réservés R (210) s'effectue en réponse à l'un du groupe de ;
i. l'occupation de l'ensemble R (210), et
ii. l'occupation combinée des ensembles R (210) et d'un ensemble 0 (230) de créneaux pour des utilisateurs de paquets qui suivent une utilisation traditionnelle à partition flexible.

7. Procédé selon la revendication 1, dans lequel une durée d'occupation de canal pour un utilisateur de paquets dans un créneau de l'ensemble T (220) est ajustée de manière dynamique, de sorte que la durée d'occupation diminue par rapport à l'occupation de l'ensemble T.

8. Procédé selon la revendication 1, dans lequel, dans le cas d'un créneau à voler, un créneau est sélectionné dans l'ensemble T (220) et aucun nouvel utilisateur de paquets n'est placé dans ledit créneau sélectionné ; le vol est alors retardé pour une période, afin de permettre l'achèvement de l'appel par certains ou tous les utilisateurs actuels de paquets de courte durée.

9. Procédé selon la revendication 1, dans lequel, dans le cas d'un créneau à voler, ce créneau de l'ensemble T (220) hébergeant actuellement le plus petit nombre d'utilisateurs multiplexés est sélectionné.

10. Procédé selon la revendication 1, dans lequel, si un espace sur un créneau horaire réservé devient disponible, l'utilisateur de paquet de la plus longue durée sur un créneau horaire non réservé est transféré dans ledit créneau horaire réservé, où l'utilisateur de paquet le plus long est défini comme étant l'un ou l'ensemble de :
i. celui avec la plus grande taille de données tamponnées ; et
ii. celui avec le plus de données entrantes.
